# EUROPEAN PATENT APPLICATION

(11) **EP 4 804 357 A1**
(43) Date of publication of application: **09.09.2026**
(21) Application number: 26157132.7
(22) Date of filing: 09.02.2026
(51) Int. Cl.: H02G 1/10, B63B 35/04, H02G 9/02

(54) **CABLE OVERBOARDING SYSTEM**

(30) Priority: 03.03.2025 NO 20250233
(71) Applicant: Nexans, 92400 Courbevoie (FR)
(72) Inventor: SAND, Siamak, N-1176 Oslo (NO)
(74) Representative: Acapo Onsagers AS

(57) **Abstract**

There is provided a cable handling system for deploying a cable bundle from a cable-laying vessel. The cable bundle comprises a first layer and a second layer on top of the first layer. The first layer comprises a first cable and a second cable adjacent to the first cable. The second layer comprises a third cable. The cable handling system comprises an over-boarding guide assembly comprising a curved surface for bending the cable bundle as the cable bundle is deployed overboard. The cable handling system comprises a bundle support structure provided on or adjacent to the over-boarding guide assembly. The cable handling system comprises a first side support and a second side support arranged such that the first layer of the cable bundle is receivable therebetween as the cable bundle is bent. The first and second side supports are arranged to substantially constrain lateral movement of the first cable with respect to the second cable as the cable bundle passes therethrough.

## Description

### Field of the invention

The present invention relates to a cable handling system, specifically to a cable handling system for deploying a cable bundle from a cable-laying vessel. The present invention also relates to a cable-laying vessel comprising said cable handling system and to a method of deploying a cable bundle from a cable-laying vessel.

### Background

During installation, submarine cables may be deployed from a marine vessel, such as a cable laying ship or barge. The vessel may comprise a cable handling system for deploying (also referred to herein as "over boarding") the cable from vessel into a body of water. The cable handling system may be arranged to feed the cable from a turntable and to eventually be over-boarded into a body of water (e.g. sea). The cable handling system may comprise means for tensioning the cable. The cable handling system may comprise a guide assembly at the stern of the vessel. In some examples, the guide assembly comprises a chute. The chute may extend out from the vessel, e.g. beyond the stern of the vessel. In some examples, the guide assembly may alternatively or additionally comprise a lay wheel which may extend out from the vessel, e.g. beyond the stern of the vessel. The lay wheel may be arranged to rotate with a substantially horizonal axis of rotation. Importantly, the lay wheel and / or chute may comprise a curved surface. The cable is therefore bent as it lays on the lay wheel and / or chute. In examples, the cable may be bent from being substantially horizontal towards the body of the water. On touching down at the seabed, the submarine cable may the bent in generally the opposite direction to the bending by the curved surface of the guide assembly.

Some cable systems, such as those for connecting two points of a power generation system, include three submarine power cables. One of the cables may be for a plus pole, one for a minus pole and then a final cable for redundancy. The cable system may comprise additional cables, such as fibre optic cable, running along the length of the power cables.

Rather than laying each cable of a cable system individually, it can be beneficial to lay multiple cables of the cable system simultaneously. This may be achieved by bundling the submarine cables and lowering the bundle into the water together. In such examples, the over-boarding system may additionally comprise a bundling apparatus arranged to form the cable bundle using an elongated bundling element. It can be advantageous for the three power cables in the bundle to have a trefoil configuration comprising a first layer having one of the power cables and a second layer having the two other power cables, with the cable of the second layer resting on the two cables of the first layer. This is because the cables are more stable than in a planar configuration, for example. However, when the cable is bent by the curved surface of the guide assembly, the cables in the different layers of the trefoil configuration will have a different radius of curvature due to the cables of the different layers being different distances from the centre of the arc of the curved surface. If the cable bundle is bundled tightly, this can result in tension and compressional forces in the cable bundle as different cables travel different distances. Additionally, the top cable of the trefoil configuration pushes down onto the bottom cable(s) as the cable bundle is bent. This can create a horizontal force due to the interaction between the cables.

The present invention attempts to address at least some of these points.

### Summary of Invention

The present invention is defined by the appended claims and in the following.

In a first aspect, there is provided a cable handling system for deploying a cable bundle from a cable-laying vessel or boat, for example from the stern of the vessel. The cable bundle that the system is suitable for deploying comprises a first layer and a second layer. The second layer may be on top of the first layer. The first layer comprises a first cable and a second cable adjacent to the first cable. The first and second cable may be side-by-side. The second layer comprises a third cable. The third cable may be in contact with one or more cables of the first layer.

The cable over-boarding system comprises an over-boarding guide assembly. The cable over-boarding system comprises a curved surface. The curved surface may be for bending the cable bundle as the cable bundle is deployed overboard. The over-boarding guide assembly may be at or towards the stern of the vessel. At least a portion of the over-boarding guide assembly may over-hang the stern of the vessel.

The cable over-boarding system comprises a bundle support structure. The bundle support structure is provided on or adjacent to the over-boarding guide assembly, optionally provided on or adjacent to the curved surface of the over-boarding guide assembly. The bundle support structure comprises a first side support and a second side support arranged such that the first layer of the cable bundle is receivable therebetween as the cable bundle is bent by the over-boarding assembly. The first and second side supports are arranged to substantially constrain lateral movement of the first cable with respect to the second cable as the cable bundle passes therethrough.

Because the bundle support structure substantially constrains lateral movement of the first cable with respect to the second cable, the bundle support structure advantageously prevents separation of the first and second cable as the cable bundle passes therethrough. Because the bundle support structure is provided on or adjacent to the over-boarding guide assembly (optionally, on or adjacent the curved surface), separation of the first and second cables of the cable bundle is prevented as the cable bundle is bent by the curved surface. The third cable may apply a downward force on the first and / or second cables which may be translated as horizontal outwards forces on the first and / or second cables. The horizontal forces may urge the first and second cables to move relative to one another and, specifically, urge the first and second cables towards a separated state. This may be a result of the first, second and third cables having a trefoil configuration. The downward force may be greatest as the cable bundle is bent. The horizontal outwards forces on the first and / or second cables may be greatest as the cable bundle is bent by the curved surface. Thus, it is advantageous that the bundle support structure prevents separation of the first and second cable as the cable is bent by the curved surface structure because this may be when forces urging the first and second cables to horizontally separate are greatest.

The inventors have recognised that a significant advantage of providing the above-described bundle support structure as part of the over-boarding system is that the cable bundle can be bundled in a relatively loose fashion. In particular, the cable bundle can be bundled loosely enough that each cable (e.g. power cable) of the cable bundle is able to slide axially relative to the remaining (power) cables. For example, the first cable may be able to slide axially relative to the second and third cables; the second cable may be able to slide axially relative to the first and third cables; and the third cable may be able to slide axially relative to the first and second cables. Loose bundling is advantageous because it allows the cables to adjust and adapt relative to one another. This can account for a mismatch in the radii of curvature of the first and second cables compared to the third cable as the cable bundle is bent by the curved surface. In other words, the looseness in bundling allows for slack in the cable bundle which can accommodate tension and compression movements within the cable bundle. Without the bundle support structure, the looseness / slackness in the bundling would mean that the first and second cables may become horizontally separated as the cable bundle is bent. The third cable may at least partially insert itself between the first and second cables. If the cable bundle comprises a fibre optic cable around the cable bundle, this movement of the third cable might cause damage to the fibre optic cable. Thus, the provision of the bundle support structure enables loose bundling of all three (power) cables of the cable bundle. There is no need for tight bundling (in which relative axial movement between individual (power) cables of the cable bundle is prevented).

Additionally, because the invention enables loose bundling in the cable bundle, the bundling apparatus needed to bundle the cable can be made relatively straightforward. For example, there may only be a need for a single type of bundling with bundling element(s) provided around the cable bundle as a whole - rather than tighter bundling requirements which might involve individual bundling of a pair or pairs of power cables. The latter arrangement might require multiple separate bundling arrangements. This is bulky and complex. The present invention enables a smaller and simpler bundling apparatus. This is particularly advantageous because space or real estate onboard a cable laying vessel deck is typically scarce and highly valuable. This is particularly true of the region on the deck where the bundling apparatus is usually positioned (e.g. between a lay wheel and a tensioning device).

As used herein, the term "over boarding" refers to the operation of transporting a cable from a cable-laying vessel (e.g. from a work platform of the cable-laying vessel) to the sea. An over boarding system is therefore a system for performing such an over boarding operation.

As used herein, the term "axial", in the context of axial movement of a cable refers to movement of the cable in a direction substantially parallel to a longitudinal axis of the cable.

As used herein, a cable being "slidable axially" means that the cable is slidable in a direction parallel to the longitudinal axis of the cable.

As used herein, the terms "cable handling system" and "cable over boarding system" may be used interchangeably. The cable handling system may comprise features / apparatus / components required for deploying a cable overboard. This may refer in particular to the features / apparatus / components involved in the transition of the cable from the vessel to the water. Said features / apparatus / components may typically be provided at the stern of the vessel and include the over-boarding guide assembly. The cable handling system could also include other features such as a cable reel, a turntable, one or more cable pick-ups, one or more cable guides, one or more cable tensioners and / or a bundling apparatus. The cable handling system of the present invention comprises the bundle support structure.

The over-boarding guide assembly may comprise an assembly of features for guiding the cable bundle over-board. The over-boarding guide assembly may comprise one or more chutes. A chute may be a structural guide which controls the deployment of cables overboard in a smooth and controlled manner. A chute may comprise a curved surface to ensure the gradual descent of the cable from the vessel into the body of water below. In some embodiments, the over-boarding guide assembly may alternatively or additionally comprise a lay wheel. The lay wheel may be arranged to have arranged to be rotatable around a substantially horizontal axis of rotation. In such embodiments, the curved surface of the over-boarding guide assembly may be at least partially defined by a surface of the lay wheel.

As above, the cable bundle comprises three cables: the first, second, and third cables. Each of the first, second and third cables may be power cables. In some embodiments, the first cable may be for a plus pole. In some embodiments, the second cable may be for a minus pole. In some embodiments, the third cable may be a for redundancy. The cable bundle, in particular the power cables of the cable bundle, may be suitable for power transmission, for example DC power transmission or AC power transmission. The cable bundle may be suitable for transmission of high voltages (HV). For example, high-voltage levels from several kilovolts (kV) to megavolts (MV). The first and second conductors may be configured for the transmission of high voltage direct current (HVDC). Each of the power cables of the cable bundle may be a subsea cable.

In some embodiments, the cable bundle may comprise additional cables. For example, the cable bundle may comprise one or more fibre optic cables. The fibre optic cable(s) may be in the first layer, the second layer, or between or outside of the first and second layers of the cable bundle. The cable bundle may comprise additional power cables. In other words, the cable bundle may comprise more than three power cables. Said additional power cables may be in the first layer, the second layer and / or in another layer of the cable bundle altogether.

In some embodiments, the cable handling system may comprise a bundling apparatus. The bundling apparatus may be referred to as a cable bundling apparatus. The bundling apparatus may be arranged to receive the first, second and the third cable. The bundling apparatus may be arranged to bundle the first, second and third cables together. The bundling apparatus may do this using an elongated bundling element to form the cable bundle. For example, the bundling apparatus may be arranged to wind the elongated bundling element around the first, second and third cables as the first, second and third cables are received by the cable bundling apparatus. The process may be continuous, such that the cables are received and bundled continuously. The bundling apparatus may be arranged to wind the elongated bundling element helically around the first, second and third cables. The bundling apparatus may be arranged to wind a plurality of bundling elements around the first, second and third cables. Said winding may be helical winding.

As above, the cable bundle may comprise additional cables such as one or more fibre optic cables and / or one or more additional power cables. In such embodiments, the bundling apparatus may be arranged to receive one or more of the additional cables and bundle said one or more additional cables together with the first, second and third cables simultaneously.

In some embodiments, the bundling apparatus may be arranged such that the bundled first, second and third cables form a trefoil shape.

As used herein, the first, second and third cables having a trefoil shape may mean that an outer contour of the three cables may have a rounded triangular appearance. This may be in an axial cross-section of the first, second and third cables, i.e. a cross-section in a plane that has a normal parallel to a longitudinal axis of the first, second and / or third power cables. The trefoil shape may mean that each of the first, second and third power cables is in contact with the remaining two cables. The trefoil shape may be identifiable even if there are other cables in the cable bundle.

In some embodiments, the bundling apparatus may be arranged to bundle the cable bundle relatively loosely.

The bundling apparatus may be arranged to bundle the cable bundle loosely enough that each of the first, second and third cables is axially moveable relative to the remaining first, second and third cables.

In some embodiments, the bundling apparatus may be arranged such that at least one of the first, second or third cables is axially moveable by up to 1 unit of length for every 400 units of total length of the cable. For example, if the first cable is 400 metres long, the third cable may be axially moveable by up to 1 m.

In some embodiments, the bundling apparatus may be arranged such that at least one of the first, second or third cables is axially moveable by up to 1 unit of length for every 450 units of total length, optionally axially moveable by up to 1 unit of length for every 600 units of total length, optionally axially moveable by up to 1 unit of length for every 800 units of total length.

This axial movement may occur over the course of a process of continuously over-boarding the third cable. As above, this axial movement may be enabled by the looseness of the bundling of the cable bundle. The above-described axial movement of the cables may be relative axial movement - i.e. the amount of axial movement of a respective cable of the first, second or third cables relative to one or both of the remaining first, second or third cables.

The bundling apparatus may be arranged to bundle the cable bundle loosely enough that the first cable is laterally (or transversely) moveable with respect to the second cable. This may mean that a maximum lateral separation between the first and second cables in the first layer is non-zero.

As used herein, "lateral separation" may refer to a separation between the outer surface of the first cable relative to the outer surface of the adjacent second cable. This may be in a cross-sectional plane having a normal parallel to the longitudinal axis of the cable bundle. When the first and second cables are touching one another, the lateral separation may be zero.

As used herein, a "maximum lateral separation" of the first and second cables may refer to the maximum amount of separation between the first and second cables, for example when opposing lateral forces are applied on the first and second cables. This may be when the third cable pushes down on the first and second such that opposing lateral forces are transferred to the first and second cables. The maximum lateral separation may be measured when the cable bundle is absent of other guiding mechanisms or means for preventing separation (such as the bundle support structure). As described previously, an advantage of the bundle support structure is that it prevents lateral separation of the first and second cables even when the cable bundle is loose enough that lateral separation is possible.

In some embodiments, the maximum lateral separation between the first and second cables may be greater than or equal to 1% of a diameter of one of the first and second cables. In some embodiments, the maximum lateral separation between the first and second cables may be no more than 5% of a diameter of one of the first and second cables.

In some embodiments, the bundling apparatus may be arranged such that the tensile stiffness of the bundling element of the cable bundle is at most 15 kilonewtons, optionally at most 12 kilonewtons, optionally at most 10 kilonewtons.

In some embodiments, the cable handling system may be configured for deploying a cable bundle in which the sum of a diameter of the cables in the first layer of the cable bundle is substantially equal to a smallest separation between the first side support and the second side support. In this way, the bundle support structure is arranged to substantially prevent or constrain lateral movement of the cables of the first layer of the cable bundle. This may be at least at the point of the smallest separation between the first and second side supports.

In some embodiments, the over-boarding guide assembly may comprise a frame. The bundle support structure may be removably attachable to the frame. The chute and / or lay wheel, when present, may also be connected or attached to the frame. The bundle support structure being removably attachable to the frame advantageously means that the bundle support structure can be removed if a cable or cable bundle for which the bundle support structure is not configured is to be deployed or over boarded. This may allow for cable deployment without the bundle support structure. Alternatively, this enables a different bundle support structure, having a different diameter between the first and second side supports, to selected and attached to the frame based on the dimensions of a cable bundle to be deployed.

In some embodiments, the smallest separation between the first side support and the second side support may be adjustable. This may enable the same bundle support structure to be used with different cable bundles having different dimensions (e.g. different diameters and / or numbers of cables in the first layer).

In some embodiments, the over-boarding guide assembly may comprise a lay wheel. In such embodiments, the curved surface may be at least partially defined by a surface of the lay wheel.

The lay wheel may have an axis of rotation that is substantially horizontal. The axis of rotation of the lay wheel may be substantially orthogonal to a longitudinal axis of the cable bundle. The lay wheel may at least partially extend beyond the stern of the cable-laying vessel.

In some embodiments, the first side support (of the bundle support structure) may comprise a plurality of discrete first guiding portions. The second side support may comprise a corresponding plurality of discrete second guiding portions. The first and second discrete guiding portions may together form a plurality of guiding portion pairs. Each of the first and second guiding portions may comprise a roller. Each roller may have an axis of rotation that is substantially perpendicular to a longitudinal direction along which the cable bundle is receivable by the respective guiding portion pair. In this way, the guiding portion pairs may constrain lateral movement of the cables in the first layer while guiding the cable bundle therethrough in a low-friction manner.

In some embodiments, the first and / or second side support may be provided as a plate or continuous surface.

In some embodiments, the bundle support structure may be arranged to receive the cable bundle at a first end and output the cable bundle at a second end. A separation (e.g. a lateral separation) between the first and second side supports may increase towards the first and / or second end. A separation (e.g. lateral separation) between the first and second side supports may be smallest between the first end and the second end. Such an arrangement may result in the bundle support structure having a tapered configuration. This may be advantageous to accommodate movement of the cable laying vessel e.g. due to currents or waves.

In a second aspect, there is provided a cable-laying vessel comprising the cable handling system of the first aspect.

In a third aspect, there is provided a method of deploying a cable bundle from a cable-laying vessel. The method comprises receiving, at an over-boarding guide assembly, a cable bundle. The cable bundle comprises a first layer and a second layer on top of the first layer. The first layer comprises a first cable and a second cable adjacent to the first cable. The second layer comprises a third cable.

The method comprises bending the cable bundle as the cable bundle is deployed overboard using a curved surface of the over-boarding guide assembly.

The method comprises constraining lateral movement of the first cable with respect to the second cable as the cable bundle is bent using a bundle support structure. The bundle support structure comprises a first side support and a second side support arranged such that the first layer of the cable bundle is received therebetween.

In some embodiments, forming the cable bundle may comprise bundling first, second and the third cables using an elongated bundling element.

Features and advantages described in relation to one aspect may be applicable to the other aspects. For example, features and advantages described in relation to the cable handling system of first aspect may be applicable to the method of the third aspect.

### Short description of the drawings

In the following description this invention will be further explained by way of exemplary embodiments shown in the drawings:
Fig. 1 shows a schematic perspective view of a cable bundle;
Fig. 2A shows a cross-sectional schematic view of the cable bundle of Fig. 1;
Fig. 2B shows another cross-sectional schematic view of the cable bundle of Fig. 1, and represents how cables in the bottom layer of the cable bundle are separable due to the relatively loose bundling of the cable bundle of Fig. 1;
Fig. 3 shows a perspective view of the stern of a cable laying vessel comprising a cable handling system according to the present invention that suitable for receiving loosely bundled cables;
Fig. 4 shows a perspective view focussing on the bundle support structure and a portion of the lay wheel of the cable handling system of Fig. 3;
Fig. 5 shows a front view of the bundle support structure and lay wheel of Fig. 4;
Fig. 6 shows a top view of the bundle support structure and lay wheel of Fig. 4; and
Fig. 7 shows a schematic of an example cable handling system according to the present invention.

### Detailed description of the invention

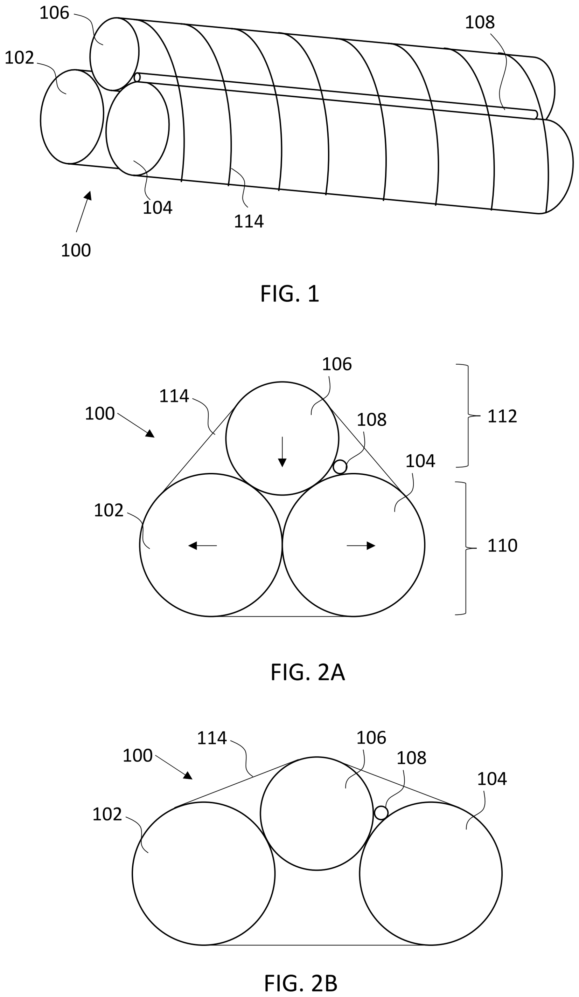

Fig. 1 shows a schematic perspective view of a cable bundle 100. Fig. 2A shows a cross-sectional schematic view of the cable bundle 100 of Fig. 1

The cable bundle 100 comprises three power cables: first and second power cables 102, 104 in a first layer 110 and a third power cable 106 in a second layer 112. The second layer 112 is on top of the first layer 110 such that the third power cable 106 is on top of the first and second power cables 102, 104. The third power cable 106 is in contact with the first and second cables 102, 104. Collectively, the first, second and third power cables have a substantially trefoil shape, as can be seen in Fig. 2A (i.e. have a rounded triangular contour shape when viewed in cross-section).

In this example, the power cables of cable bundle 100 are for power transmission of HVDC. The first cable 102 is a plus pole. The second cable 104 is a minus pole. The third cable 106 is for redundancy.

In other examples, the power cables are configured differently. For example, the power cables may be configured for AC power transmission.

The power cables 102, 104, 106 of the cable bundle 100 are each subsea cables. Indeed, the cable bundle 100 as a whole is suitable for subsea operation.

In this example, the cable bundle 100 further comprises a fibre optic cable 108.

In other examples, the cable bundle 100 may comprise any number of additional cables - e.g. additional power cables or cables such as fibre optic cables.

The cable bundle 100 is held together with an elongated bundling element 114 which is wound helically around the cable bundle 100. The elongated bundling element 114 extends around all three power cables and the fibre optic cable together. Only a single elongated bundling element 114 is shown in the drawings. However, there may be additional elongated bundling elements 114 helically wound around the cable bundle 100 as a whole.

The cable bundle 100 is loosely bound or bundled. This loose bundling advantageously means that each of the first, second and third power cables 102, 104, 106 is moveable axially with respect to one another. In particular, each of the power cables are moveable relative to the other power cables by 1 unit of length for every 400 units of total length of the cable in this example. Axial movement means movement along the longitudinal length of the cable - so into or out of the page in the context of Fig. 2A.

The advantage of the above-described loose bundling is that tension and compressional forces within the cable bundle 100 can be accommodated as the cable bundle 100 is deployed. These forces might otherwise arise when the cable bundle 100 is bent in order to over-board the cable. However, because of the loose bundling, lateral movement of the cables is possible. This is shown in Figs. 2A and 2B.

The arrows in Fig 2A show how the third cable 106 exerts a downward force on the first and second cables 102, 104 as the cable is over-boarded. This downward force is translated into opposing horizontal forces on the first and second cables 102. As shown in Fig. 2B, these forces in combination with loose bundling can cause the first and second cables to become laterally separated and the third cable 106 partially inserts itself between the first and second cables 102, 104. Such movement is undesirable and could cause damage to the fibre optic cable 108. The relative lateral movements of the first, second and third cables 102, 104, 106 is exaggerated in Fig. 2B. The present disclosure relates to a bundle support structure which addresses this issue while enabling the sort of loose bundling shown in Fig. 1. As described in more detailed below, the bundle support structure is arranged to substantially constrain lateral movement of the first cable with respect to the second cable as the bundle 100 passes therethrough and as the bundle 100 is bent.

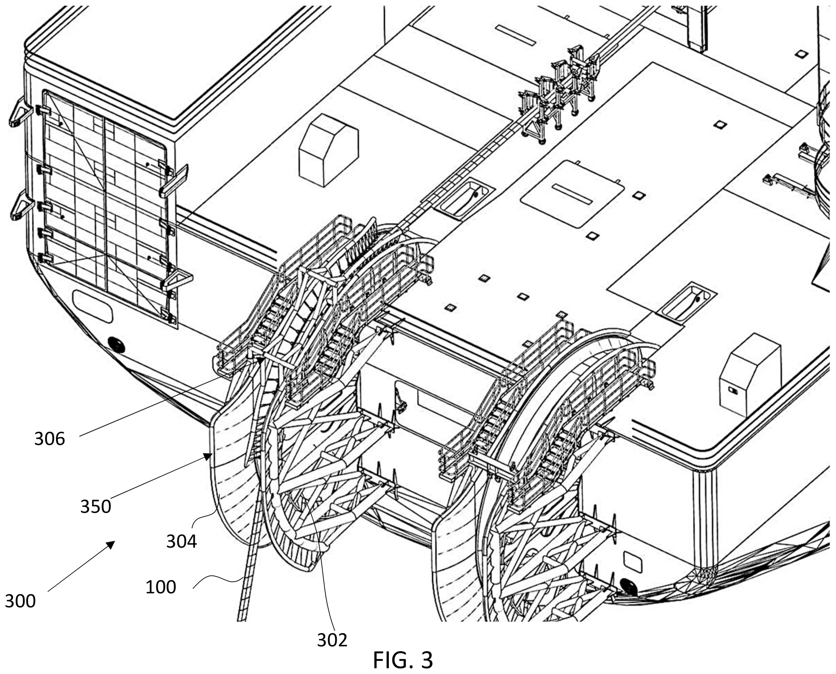

Fig. 3 shows a perspective view of the stern of a cable laying vessel 300 comprising a cable handling system according to the present invention. Only a portion of the cable handling system is visible in Fig. 3.

The cable handling system comprise an over-boarding guide assembly which comprises a lay wheel 302 and a chute 304. Towards the top of the lay wheel 302 is a bundle support structure 306. As shown in Fig. 3, the cable handling system is arranged to overboard cable bundle 100 from the stern of the vessel via the over-boarding guide assembly 350. The cable bundle 100 is bent and guided by the lay wheel 302 from being substantially horizontal on-deck to then being directed into the water. The lay wheel 302 is rotatable about an axis of rotation that is substantially horizontal and orthogonal to the longitudinal axis of the cable bundle 100. This assists with over-boarding the cable bundle 100. The chute 304 provides further guidance and support to the cable bundle 100.

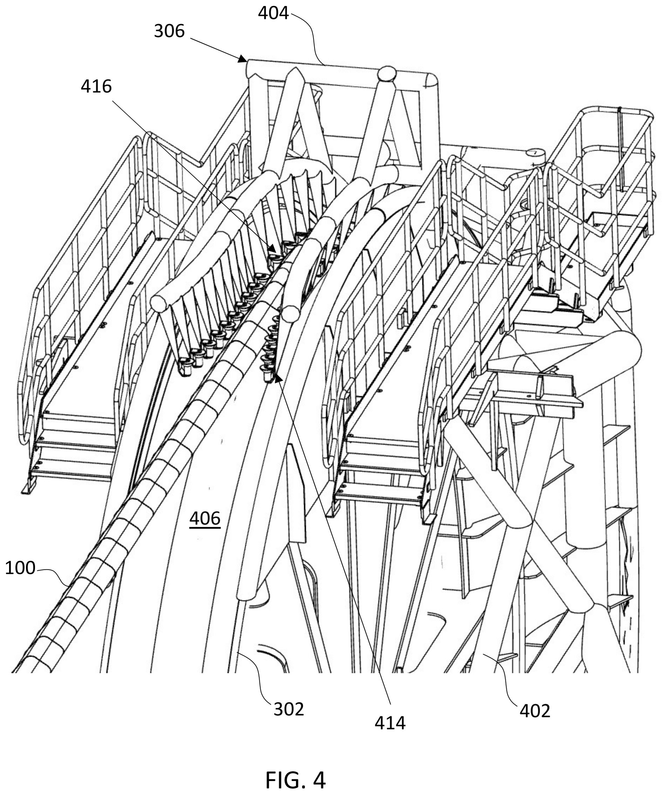

The bundle support structure 350 will now be described in more detail and in relation to Figs. 4 to 6.

Fig. 4 shows a perspective view of the bundle support structure 306 and a portion of the lay wheel 302 as well as a frame 402 of the over-boarding guide system 350. The frame 402 supports the lay wheel 302. Fig. 4 shows how the bundle support structure 306 has a frame 404. The fame 404 of the bundle support structure 306 is removable attached to the frame 402 of the over-boarding guide system 350. Fig. 4 also shows how the lay wheel 302 comprises a curved surface 406. The cable bundle 100 makes contact with the curved surface 406 and is bent and guided by the curved surface 406 towards water as the cable is over-boarded. As described previously, the region where the cable bundle 100 is bent on lay wheel 302 may be where the third cable 106 applies a maximal downward force on the first and second cables 302, 304. The bundle support structure 306 is provided in this region to prevent lateral separation of the first and second cables 302, 304.

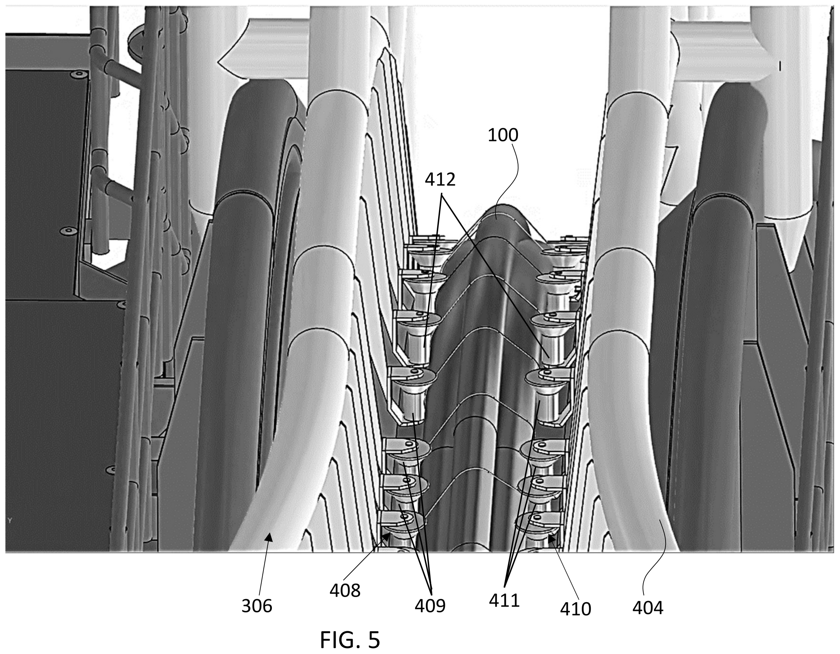

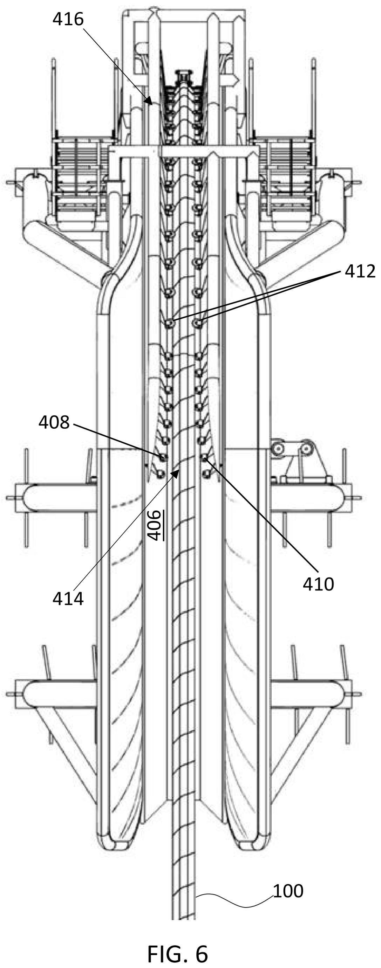

Figs. 5 and 6 show more clearly the features of the bundle support structure 306.

Fig. 5 shows a front view of the bundle support structure 306 and lay wheel 302.

Fig. 6 shows a top view of the bundle support structure 306 and lay wheel 302.

The bundle support structure 306 comprises a first side support 408 and a second side support 410. In this example, the first side support 308 comprises a plurality of discrete first guiding portions and the second side support 310 comprises a plurality of discrete second guiding portions. In this example, each discrete first guiding portion comprises a first roller 409 and each second guiding portion comprises a second roller 411. In this example, each discrete first guiding portion has a corresponding second guiding portion such that there a plurality of guiding portion pairs 412.

The first side support 408 and the second side support 410 are arranged such that the first layer 110 of the cable bundle 100 is receivable therebetween as the cable bundle 100 is bent by the curved surface 406 of the layer wheel 302. Each of the first and second rollers 409, 411 has an axis of rotation that is substantially perpendicular to a longitudinal direction along which the cable bundle 100 is receivable by the respective guiding portion pair 412. In this way, the rollers help guide the cable bundle 100 in a low-friction manner as the cable bundle 100 passes through the bundle support structure 306.

As shown more clearly in the top view of Fig. 6, a separation between pairs of rollers 412 of the first and second side supports 408, 410 changes. Fig. 6 only shows a portion of the bundle support structure 306 - from roughly a central portion 416 to an end portion 414. The central portion 416 is substantially at the highest point of the lay wheel 302 (and so where the downward force applied by the third cable 106 on the first and second cables 102, 104 may be highest). The end portion 414 is where the cable bundle 100 leaves the region of the bundle support structure 306. In other words, in use, the cable bundle 100 moves from the central portion 416 to the end portion 414.

In the central portion 416, the separation between pairs of rollers 412 is substantially equal to the sum of the diameter of the first and second cables 102, 104 (i.e. the sum of the diameter of the cables in the first layer 110 which are the cables that are received by the first and second side supports 408,410 and so the rollers). This means that, at least in the central portion 416, the pair of rollers 412 are arranged to substantially constrain lateral movement of the first cable 102 with respect to the second cable 104 as the cable bundle 100 passes through the central region 416. This constraint prevents the loosely bound cable bundle 100 collapsing into the shape shown in Fig. 2B.

The separation between pairs of rollers 412 increases from the central portion 416 to the end portion 414. The reason for this is to accommodate relative motion of the cable laying vessel 300 with respect to the portion of cable bundle 100 that has already been deployed. This motion may be due to currents, wind, waves etc.

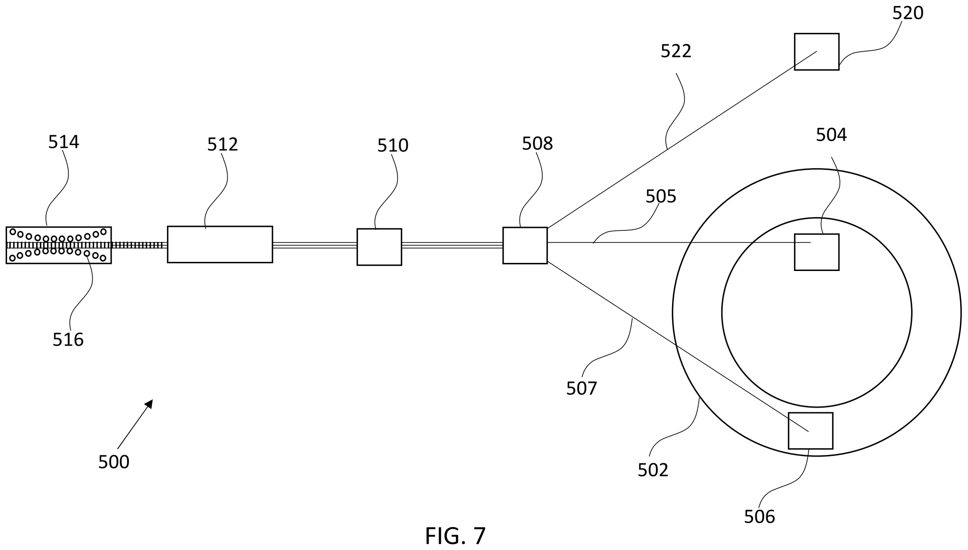

Fig. 7 shows a schematic of an example of a wider cable handling system 500 comprising the features described in Figs. 3 to 6 as well as additional features.

The cable handling system 500 comprises a first turntable 502 comprising a dual reel of power cable (comprising a wound first power cable 505 and a wound second power cable 507), a first cable pick-up 502 and a second cable pick-up 504 arranged, respectively, to receive the first and second power cables 505, 507 from the turntable. The cable handling system 500 further comprises a cable guide 508, a tensioner 510, a bundling apparatus 512, a lay wheel 514 and a bundle support structure 516. The cable handling system further comprises a third cable pick-up 520 and a third power cable 522. The third power cable pick-up 520 receives the third power cable 522 from a second turntable not shown in the drawings. The second turntable may be below deck on the cable laying vessel 300 whereas the first turntable 502 may be provided on deck.

In operation, the first and second turntables are turned. Thus, the first, second and third power cables 505, 507, 522 are steadily and continuously unspooled to be received by the first, second and third cable pick-ups 504, 506, 520, respectively. The first, second and third power cables 505, 507, 522 are then received by the cable guide 508 which guides the three power cables into alignment such that, downstream of the cable guide 508, the three power cables move substantially parallel to one another. The first, second and third power cables 505, 507, 522 are then received by the tensioner 510 which is arranged to maintain suitable tension within the unspooled cables e.g. to prevent the cables dragging along deck but without overly stressing the cables.

Next, the first, second and third power cables 505, 507, 522 are received by the bundling apparatus 512. The bundling apparatus 512 is arranged to bundle the first, second and third power cables 505, 507, 522 by winding an elongated bundling element helically around the three cables. As described, the bundling is loose enough that longitudinal or axial movement of the cables with respect to one another is possible. Downstream of the bundling apparatus 512 (i.e. after bundling) the three power cables 505, 507, 522 may be referred to as a cable bundle.

Next, the cable bundle is received at the lay wheel 516 where the cable bundle is guided and bent by the curved surface of the lay wheel 516 as the cable bundle is deployed over-board. At the same time, the cable bundle is received by the bundle support structure 516. As described in relation to earlier figures, the bundle support structure 514 constrains lateral movement of the first cable 505 with respect to the second cable 507 as the cable bundle is bent.

In some examples, the cable handling system 500 additionally comprises a means for bundling further cables within the cable bundle. This may include bundling a fibre optic cable with the power cables, for example.

### List of reference numerals:

- 100: - cable bundle
- 102: - first power cable
- 104: - second power cable
- 106: - third power cable
- 108: - fibre optic cable
- 110: - first layer of cable bundle
- 112: - second layer of cable bundle
- 114: - elongated bundling element
- 300: - cable laying vessel
- 302: - lay wheel
- 304: - chute
- 306: - bundle support structure
- 350: - over boarding guide assembly
- 402: - lay wheel frame
- 404: - bundle support structure frame
- 406: - curved surface (of lay wheel)
- 408: - first side support
- 409: - first roller
- 410: - second side support
- 411: - second roller
- 412: - roller pair
- 414: - first end (of bundle support structure)
- 416: - centre (of bundle support structure)
- 500: - over-boarding system
- 502: - turntable
- 504: - first cable pick-up
- 505: - first power cable
- 506: - second cable pick-up
- 507: - second power cable
- 508: - cable guide
- 510: - tensioner
- 512: - bundling apparatus
- 514: - lay wheel
- 516: - bundle support structure
- 520: - third cable pick-up
- 522: - third power cable

## Claims

1. A cable handling system for deploying a cable bundle (100) from a cable-laying vessel (300), wherein the cable bundle (100) comprises a first layer (110) and a second layer (112) on top of the first layer, the first layer (110) comprising a first cable (102) and a second cable (104) adjacent to the first cable (102), and the second layer (112) comprising a third cable (106), the cable handling system comprising:
an over-boarding guide assembly (350) comprising a curved surface (406) for bending the cable bundle (100) as the cable bundle is deployed overboard;
a bundle support structure (306) provided on or adjacent to the over-boarding guide assembly (350) and comprising a first side support (408) and a second side support (410) arranged such that the first layer (110) of the cable bundle (100) is receivable therebetween as the cable bundle (100) is bent, and wherein the first and second side supports (408, 410) are arranged to substantially constrain lateral movement of the first cable (102) with respect to the second cable (104) as the cable bundle (100) passes therethrough.

2. The cable handling system of claim 1, wherein the cable handling system further comprises a bundling apparatus (512) arranged to: receive first, second and the third cables (102, 104, 106); and bundle the first, second and third cables (102, 104, 106) together using an elongated bundling element (114) to form the cable bundle (100).

3. The cable handling system of claim 2, wherein the bundling apparatus (516) is arranged such that the bundled first, second and third cables form a trefoil shape.

4. The cable handling system of claim 2 or 3, wherein the bundling apparatus (512) is arranged to bundle the cable bundle (100) loosely enough that each of the first, second and third cables (102, 104, 106) is axially moveable relative to the remaining first, second and third cables.

5. The cable handling system of any one of the preceding claims, configured for deploying a cable bundle (100) in which the sum of a diameter of the cables (102, 104) in the first layer of the cable bundle (100) is substantially equal to a smallest separation between the first side support (408) and the second side support (410).

6. The cable handling system of any one of the preceding claims, wherein the over-boarding guide assembly (350) comprises a frame (402) and wherein the bundle support structure (306) is removably attachable to the frame (402).

7. The cable handling system of any one of the preceding claims, wherein the over-boarding guide assembly (350) comprises a lay wheel (302) and wherein the curved surface (406) is at least partially defined by a surface of the lay wheel (302).

8. The cable handling system of any one of the preceding claims, wherein the first side support (408) comprises a plurality of discrete first guiding portions (409) and the second side support (410) comprises a corresponding plurality of discrete second guiding portions (411) to form a plurality of guiding portion pairs (412).

9. The cable handling system of claim 8, wherein each of the first and second guiding portions (409, 411) comprises a roller having an axis of rotation that is substantially perpendicular to a longitudinal direction along which the cable bundle (100) is receivable by the respective guiding portion pair (412).

10. The cable handling system of any one of the preceding claims, wherein the bundle support structure (306) is arranged to receive the cable bundle (100) at a first end and output the cable bundle (100) at a second end, and wherein a separation between the first and second side supports increases towards the first and / or second end.

11. A cable-laying vessel (300) comprising the cable handling system of any one of the preceding claims.

12. A method of deploying a cable bundle (100) from a cable-laying vessel (300), the method comprising:
receiving, at an over-boarding guide assembly, a cable bundle (100) comprising a first layer (110) and a second layer (112) on top of the first layer (110), the first layer (110) comprising a first cable (102) and a second cable (104) adjacent to the first cable, and the second layer (112) comprising a third cable (106);
bending the cable bundle (100) as the cable bundle is deployed overboard using a curved surface (406) of the over-boarding guide assembly; and
constraining lateral movement of the first cable (102) with respect to the second cable (104) as the cable bundle (100) is bent using a bundle support structure (306), the bundle support structure (306) comprising a first side support (408) and a second side support (410) arranged such that the first layer (110) of the cable bundle (100) is received therebetween.

13. The method of claim 12, further comprising forming the cable bundle (100) by bundling first, second and the third cables (102, 104, 106) using an elongated bundling element (114).
